Europäisches Patentamt

European Patent Office

Office européen des brevets

(19)

(11) **EP 0 706 544 B1**

(12) **FASCICULE DE BREVET EUROPEEN**

(45) Date de publication et mention
de la délivrance du brevet:
**09.05.2001 Bulletin 2001/19**

(21) Numéro de dépôt: **94921006.6**

(22) Date de dépôt: **30.06.1994**

(51) Int Cl.7: **C09D 5/03**, C09D 177/02,
C09D 177/00, C08L 77/00,
C08L 77/02
// (C08L77/00, 63:00),
(C08L77/02, 63:00)

(86) Numéro de dépôt international:
**PCT/FR94/00804**

(87) Numéro de publication internationale:
**WO 95/01403 (12.01.1995 Gazette 1995/03)**

(54) **UTILISATION D'UNE COMPOSITION EN POUDRE A BASE DE POLYAMIDE POUR LE REVETEMENT DE SUBSTRATS METALLIQUES**

VERWENDUNG EINER PULVERZUSAMMENSETZUNG AUF BASIS VON POLYAMID ZUR BESCHICHTUNG VON METALLOBERFLÄCHEN

USE OF A POLYAMIDE-BASED POWDER COMPOSITION FOR THE COATING OF METAL SUBSTRATES

(84) Etats contractants désignés:
**AT BE CH DE DK ES FR GB GR IE IT LI LU NL PT SE**

(30) Priorité: **30.06.1993 FR 9307976**

(43) Date de publication de la demande:
**17.04.1996 Bulletin 1996/16**

(73) Titulaire: **Atofina**
**92800 Puteaux (FR)**

(72) Inventeurs:
• **PERRAUD, Eric**
**F-27470 Serquigny (FR)**
• **TEDOLDI, Arnaud**
**F-27170 Beaumont-le-Roger (FR)**

• **SAGE, Jean, Marc**
**F-69600 Oullins (FR)**

(56) Documents cités:
**EP-A- 0 337 443         EP-A- 0 412 888
DE-C- 3 921 210**

• **CHEMICAL ABSTRACTS, vol. 80, no. 12, 25 Mars 1974, Columbus, Ohio, US; abstract no. 61147b, page 73 ; & JP,A,48 071 425 (TOA PAINT) 27 Septembre 1973**
• **DATABASE WPI Week 199008, Derwent Publications Ltd., London, GB; AN 1990-054949 & JP 2 008 230 A (DAINICHISEIKA COLOR & CHEM MFG; UKIMA GOSEI KK) 11 Janvier 1990**

**Description**

DOMAINE TECHNIQUE

L'invention concerne l'utilisation d'une composition en poudre à base de polyamide pour le revêtement de substrats métalliques.

Les polyamides sont couramment utilisés pour le revêtement des substrats métalliques, en raison notamment de leur bonnes propriétés mécaniques telles que résistance à l'abrasion, aux chocs et leur inertie chimique vis-à-vis de nombreux produits tels que les hydrocarbures, les bases et les acides minéraux.

Mais il est connu que l'adhérence des polyamides sur les métaux est insuffisante par suite d'une mauvaise mouillabilité à l'état fondu des polyamides. Pour surmonter ce défaut, on a enduit le support métallique d'une sous-couche, appelée primaire d'adhérence, destinée à assurer l'accrochage et l'ancrage mécanique de la poudre polyamide. En général le primaire d'adhérence que l'on utilise est à base de résines thermodurcissables et est appliqué sous forme de poudre ou en solution ou en suspension dans des solvants organiques ou aqueux. Il faut donc prévoir des installations supplémentaires pour l'élimination éventuelle des solvants et pour la cuisson du primaire avant l'enduction du substrat ainsi revêtu avec la poudre polyamide. De plus, la cuisson et/ou le séchage du primaire augmentent de façon non négligeable la durée des opérations de revêtement, et donc leur coût.

TECHNIQUE ANTERIEURE

On a décrit dans le brevet EP 0412 288 des mélanges de polyamides et de résines époxy/sulfonamide qui sont utilisables pour revêtir des substrats métalliques sans utiliser une sous-couche de primaire d'adhérence. Ces mélanges de polyamide et de résines époxy/sulfonamide en poudre s'appliquent au pistolet électrostatique sur le substrat. Il suffit ensuite de passer le substrat ainsi revêtu dans un four pour obtenir la fusion de la poudre et un revêtement uniforme. On peut aussi préchauffer le substrat au-dessus du point de fusion de la poudre et le tremper dans un lit fluidisé de la poudre.

EXPOSE DE L'INVENTION

On a maintenant trouvé qu'on pouvait utiliser une autre composition en poudre à base de polyamide pour revêtir des substrats métalliques sans primaire d'adhérence et qui présente une très bonne résistance au brouillard salin. La composition est un mélange qui se présente sous forme de poudre comprenant au moins un polyamide et au moins un polymère (A) ayant des fonctions hydroxy et compatible avec le polyamide, la composition comprend jusqu'à 30 parties (en poids) de (A) pour 100 parties de polyamide.

DE-C-3.921.210 décrit des mélanges de polyamide et de copolymère éthylène-alcool vinylique, avec un tiers-corps pour fabriquer des granulés de structure multicouche.

EP-A-337.443 décrit des compositions pour moulage à base de polyamide dérivant de xylylène diamine et d'$\alpha,\omega$ diacide aliphatique.

JP-A-2-008.230 a pour objet des particules poreuses majoritairement à base d'EVOH et contenant de 1 à 50 parties de polyamide pour 100 parties en poids d'EVOH utilisables pour des peintures en poudre, comme additifs de produits cosmétiques, comme agents matants, etc...

Par polyamide au sens de l'invention on entend les produits de condensation des lactames, des aminoacides ou des diacides avec les diamines et, en règle générale, tout polymère formé par des motifs reliés entre eux par des groupes amides. On utilise avantageusement le polyamide 11 qu'on peut obtenir par condensation de l'acide amino-11 undécanoïque ou du lactame 11 et le polyamide 12 qu'on peut obtenir par condensation de l'acide amino 12 dodécanoïque ou du lactame 12. On peut aussi utiliser des polyamides 12-12.

On entend aussi par polyamide des polymères ayant des blocs polyamides dans leur chaîne. Ce sont par exemple les polyétheresteramides formés de blocs polyamides et de blocs polyéther reliés par des fonctions esters. Le brevet US 4.230.838 décrit une préparation possible de ces produits. On effectue la polymérisation d'un lactame en présence d'un diacide pour obtenir un polyamide à extrémités acide-carboxylique puis on y ajoute un polyéther à extrémités hydroxy. Le polyéther est de préférence du polytétraméthylèneglycol, polypropylèneglycol ou du polyéthylèneglycol. D'autres polymères ayant des blocs polyamides dans leur chaîne peuvent être préparés selon le brevet US 4.207.410. On mélange en présence d'eau un lactame, un diacide et un polyéther à extrémités hydroxy et on maintient la température. On obtient un polymère ayant des blocs polyamides et des blocs polyéthers mélangés avec du diacide, tous ces éléments étant reliés par des fonctions ester. On ne sortirait pas du cadre de l'invention en utilisant un mélange de ces polyamides.

Les polymères (A) ayant des fonctions hydroxy peuvent être des copolymères dont l'un des monomères possède au moins une fonction hydroxy, par exemple les copolymères de l'éthylène et de l'alcool vinylique (EVOH) ou des polymères qu'on a modifiés pour y introduire des fonctions hydroxy par exemple des polyacétates. La quantité de polymère (A) dépend du nombre de fonctions hydroxy qu'il porte et des propriétés qu'on recherche pour le mélange. Il n'est pas souhaitable non plus de trop diluer le polyamide sinon on perd les qualités du revêtement. Une portion de 30 parties de polymères (A) pour 100 parties de polyamide est un ordre de grandeur du maximum. En général des quantités de 1 à 15 parties sont suffisantes pour obtenir une très bonne adhérence au substrat.

Le mélange utilisé dans l'invention se présente sous forme de poudre. Ce mélange peut être un mélange de poudre de polyamide et de poudre de polymère (A).

On dépose ce mélange sur le substrat et par fusion on obtient un revêtement homogène. Ce revêtement comprend donc un mélange de polyamide et de polymère (A).

On entend par "compatible" que, dans le revêtement le polymère (A), est dispersé dans la matrice polyamide.

On peut aussi préparer le mélange en mélangeant le polyamide et le polymère (A) en fusion puis en réduisant en poudre. On peut aussi dissoudre dans un solvant le polyamide et le polymère (A), évaporer le solvant puis réduire le mélange en poudre. Que ce soit par fusion ou par mise dans un solvant, on obtient un mélange de polyamide et de polymère (A) sous forme de poudre.

"Le polymère (A) ayant des fonctions hydroxy et compatible avec le polyamide" veut dire que, dans chaque grain de poudre, le polymère (A) est dispersé dans la matrice polyamide.

Avantageusement le point de fusion du polymère (A) est voisin de celui des polyamides, c'est-à-dire en général compris entre 130 et 190 °C. Le melt index (en g/10 mn à 210°C, la charge étant 2.160 g et la filière 2,095 mm) du polyamide (A) est avantageusement inférieur à 200 et de préférence compris entre 1 et 20.

A titre d'exemple de polymère (A) on peut utiliser des copolymères EVOH de l'éthylène et de l'alcool vinylique de formule générale:

$$-[-(CH_2\text{-}CH_2)_x\text{-}(CH_2\text{-}CHOH)_y\text{-}]_n-$$

avec 60 % > x >. 20 %

Toutefois, les meilleures performances d'adhérence du revêtement sont obtenues avec des teneurs molaires en éthylène dans le copolymère supérieures à 40%.

Le copolymère EVOH peut inclure un comonomère de type propylène, butène-1 ou pentène-1 et dont la teneur molaire dans le copolymère, généralement inférieure à 5 %, n'influe pas sur les propriétés de celui-ci. On peut aussi ajouter au mélange de polyamide et de polymère (A) des résines époxy/sulfonamides (B), de telles résines ont déjà été décrites dans le brevet EP 0412 288. Elles peuvent être obtenues par réaction de composés sulfonamides et de composés époxydes. Les résines époxydes sont des composés solides ou liquides qui comportent au moins une fonction époxyde, seuls ou en mélange.

Les mélanges peuvent être constitués de composés ayant un nombre différent de fonctions époxydes et ont très souvent une fonctionnalité globale (en époxyde) non entière. Il existe actuellement sur le marché et dans la littérature scientifique et technique un très grand nombre d'exemples de composés organiques répondant à cette définition et dont les structures sont très diverses. Les composés les plus courants sont ceux qui dérivent de la réaction du bisphénol A et de l'épichlorhydrine et, notamment, les composés résultant de l'addition de deux molécules d'épichlorhydrine sur une molécule de bisphénol A (DGEBA).

Les résines époxydes préférées par la demanderesse sont celles dont la fonctionnalité globale est comprise entre 1,9 et 2,1 et avantageusement égale à 2.

Les composés aromatiques sulfonamides peuvent être choisis parmi les dérivés monosulfonamides du benzène halogéné ou non, tels que le benzène sulfonamide, le nitrobenzène sulfonamide, l'ortho-, méta- ou para-toluène sulfonamide, les amino-alkyl benzène sulfonamides, le naphtalène ou le xylène sulfonamide. La proportion des composés époxyde et sulfonamide doit être telle que le nombre de fonctions époxyde soit égal au nombre de fonctions sulfonamide. Toutefois, pour des raisons de cinétique de réaction et/ou de qualité du produit final on peut être amené à faire varier le rapport stoechiométrique :

$$\frac{\text{nombre de fonctions sulfonamide}}{\text{nombre de fonctions époxydes}}$$

entre 0,25 et 1 et de préférence entre 0,5 et 1.

Le point de fusion des résines époxy/sulfonamides conformes à l'invention est en général compris entre 50 et 180 °C, et leur masse moléculaire moyenne en poids Mw est en général comprise entre 500 et 10.000. La quantité de résines (B) peut varier dans de larges proportions, en général on utilise au plus 20 parties de résines B pour 100 parties de polyamide et de préférence 1 à 7 parties.

Au mélange décrit ci-dessus, on peut incorporer divers autres constituants tels que des charges, des pigments, des additifs tels que des agents anti-cratère, réducteur, antioxydant...

A titre d'exemples de charges qui peuvent entrer dans la composition utilisées dans l'invention, on peut citer le talc, les carbonates de calcium et de manganèse, les silicates de potassium et d'aluminium.

A titre d'exemple de pigments on peut citer le dioxyde de titane, le phosphate de zinc, le silicochromate de plomb, le noir de carbone, les oxydes de fer.

Il est possible d'incorporer au mélange constitué de polyamide et de polymère A divers constituants choisis parmi ceux décrits ci-dessus et dont les proportions respectives restent dans les limites habituellement rencontrées dans le domaine des compositions en poudre à base de polyamide pour le revêtement de substrats métalliques. En général on incorpore jusqu'à 100 % en poids desdits constituants, c'est-à-dire que ces charges peuvent représenter le même poids que la quantité de polyamide, de polymère (A) et éventuellement de résine époxy/sulfonamide (B). Les mélanges utilisés dans l'invention peuvent être préparés par divers procédés.

Le premier procédé mis au point par la demanderesse consiste:

- à dissoudre le polymère (A) et éventuellement les résines (B) dans un solvant approprié,
- puis à rajouter à la solution ainsi obtenue la poudre polyamide,
- et enfin à faire un séchage et tamisage du mélange pour produire une composition en poudre de granulométrie souhaitée.

Toutes ces étapes peuvent être effectuées à température ambiante.

Le second procédé d'obtention de composition en poudre utilisée dans l'invention consiste à malaxer à l'état fondu le polymère (A) et éventuellement les résines (B) avec le polyamide dans un malaxeur de type approprié. La température de malaxage peut être comprise entre 150 et 300 °C et de préférence entre 180 et 230 °C. Selon la teneur en polymère (A) et éventuellement en résines (B), on obtient ainsi un "mélange maître" ou un produit final.

Le produit final sera broyé selon les techniques habituelles, à la granulométrie souhaitée pour le revêtement.

Le mélange maître qui présente l'avantage d'assurer une bonne prédispersion du polymère (A) et éventuellement des résines (B) au sein de la matrice polyamide, peut alors être malaxé une nouvelle fois avec du polyamide selon le procédé cité au-dessus ou être utilisé selon le troisième procédé.

Le troisième procédé mis au point par la demanderesse consiste à mélanger à sec le polymère (A) et éventuellement les résines (B) ou un mélange maître, préalablement broyé finement, et la poudre de polyamide. Ce mélange à sec ou "dry-blend" ne nécessite pas d'appareillage spécial, il peut s'effectuer à température ambiante. Il est donc économique et rapide.

Le quatrième procédé d'obtention des compositions en poudre utilisées dans l'invention consiste à effectuer une (co)polycondensation des monomères de polyamide en présence du polymère (A) et éventuellement des résines (B). A cet effet, le polymère (A), et éventuellement les résines (B), est introduit dans l'autoclave en même temps que les monomères polyamides. La polymérisation est effectuée selon les procédures habituelles. On opère en général à une température comprise entre 150 et 300 °C et de préférence entre 190 et 250 °C.

Une variante de ce procédé consiste à réaliser un greffage préalable du polymère (A) sur un oligomère polyamide acide monofonctionnel. Une des extrémités de l'oligomère porte une fonction acide carboxylique.

Tout type d'appareil utilisé pour la polycondensation des polyamides peut être employé. On peut citer à titre d'exemple un réacteur équipé d'une agitation d'environ 50 tours/min, pouvant supporter une pression de 20 bars. La durée de polycondensation peut être comprise entre 5 et 15 heures, et de préférence entre 4 et 8 heures. Lorsque les opérations de polycondensation sont terminées, on obtient un mélange sous forme de granulés que l'on broie à la granulométrie souhaitée. D'une manière générale, la granulométrie des poudres conformes à l'invention peut être comprise entre 5 µm et 1 mm.

La présente invention concerne aussi les matériaux composites comprenant les substrats métalliques ainsi revêtus. Le substrat métallique peut être choisi dans une large gamme de produits. Il peut s'agir de pièces d'acier ordinaire ou galvanisé, de pièces en aluminium ou en alliage d'aluminium. L'épaisseur du substrat métallique peut être quelconque ( par exemple de l'ordre du dixième de mm, comme de l'ordre de quelques dizaines de cm).

Selon une technique connue qui ne constitue pas en elle-même un objet de l'invention, le substrat métallique, et notamment en acier ordinaire, en aluminium ou en alliage d'aluminium, a pu subir un ou plusieurs des traitements de surface suivants, cette liste n'étant pas limitative : dégraissage grossier, dégraissage alcalin, brossage, grenaillage ou sablage, dégraissage fin, rinçage à chaud, dégraissage phosphatant, phosphatations fer/zinc/tri-cations, chromatation, rinçage à froid, rinçage chromique.

A titre d'exemples de substrats métalliques aptes à être revêtus avec une composition selon l'invention, on peut citer : acier dégraissé, lisse ou grenaillé, acier dégraissé phosphaté, acier phosphaté fer ou zinc, acier galvanisé Sendzimir, acier électrozingué, acier galvanisé au bain, acier cataphorèse, acier chromaté, acier anodisé, acier sablé corindon, aluminium dégraissé, aluminium lisse ou grenaillé, aluminium chromaté.

La composition à base de polyamide utilisée dans l'invention est donc appliquée sous forme de poudre sur le substrat métallique. L'application de la composition en poudre peut s'effectuer selon les techniques d'application habituellement mises en oeuvre. Le broyage des poudres peut s'effectuer dans des appareils refroidis cryogéniquement ou à forte absorption d'air (broyeurs à couteaux, à marteaux, à disques...). Les particules de poudre obtenues sont sélectées dans des appareils appropriés pour éliminer des tranches granulométriques non souhaitées : par exemple des grains trop gros et/ou trop fins.

Parmi les techniques d'application en poudre, on peut citer la projection électrostatique, le trempage en lit fluidisé, techniques préférées pour réaliser le revêtement des substrats selon l'invention.

En projection électrostatique, la poudre est introduite dans un pistolet où elle est véhiculée par de l'air comprimé et passe dans une buse portée à un potentiel élevé généralement compris entre une dizaine et une centaine de kilovolts. La tension appliquée peut être de polarité positive ou négative. Le débit de poudre dans le pistolet est généralement compris entre 10 et 200 g/min, et de préférence entre 50 et 120 g/min. Lors de son passage dans la buse, la poudre se charge électrostatiquement. Les particules de poudre véhiculées par l'air comprimé viennent s'appliquer sur la surface métallique à revêtir, ladite surface étant elle-même reliée à la terre c'est-à-dire à un potentiel électrique nul. Les particules de poudre sont retenues sur cette surface par leur charge électrostatique. Ces forces sont suffisantes pour que l'objet poudré puisse être revêtu et déplacé puis chauffé dans un four à une température qui provoque la fusion de la poudre.

La projection électrostatique des compositions à base de polyamide utilisées dans l'invention, quelle que soit la polarité d'application, présente un avantage certain car on pourra notamment utiliser les installations industrielles standard existantes qui sont conçues pour la projection électrostatique de revêtements en poudre en une seule polarité.

En projection électrostatique, le rapport pondéral préféré de polymère (A) au polyamide dans le mélange est avantageusement compris entre 2 et 10 %. En général, on peut utiliser une poudre de granulométrie moyenne comprise entre 5 et 100 µm et de préférence entre 5 et 65 µm.

Les revêtements réalisés avec une quelconque des compositions utilisées dans l'invention et mises en oeuvre par projection électrostatique possèdent un aspect final de bonne qualité et ce, quelle que soit l'épaisseur dudit revêtement comprise entre 40 et 400 µm, ainsi que des propriétés d'adhérence renforcées par rapport aux compositions comprenant un polyamide et une résine B.

Tel n'est pas le cas pour les revêtements en poudre à base de polyamide seul sans primaire d'adhérence, qui présentent de nombreux défauts d'aspect et d'adhérence pour des faibles ou fortes épaisseurs.

Par faibles épaisseurs, on entend des épaisseurs d'environ 50 µm et par fortes épaisseurs, des épaisseurs de l'ordre de 350 µm.

Pour les épaisseurs faibles, un revêtement de polyamide présente par exemple des piqûres; pour de fortes épaisseurs, il y a d'importants risques de délaminage du revêtement, de bulles et des "taupinières" de répulsion apparaissent en grand nombre.

Dans le cas du procédé de trempage en lit fluidisé, le substrat métallique à revêtir, soigneusement préparé, en subissant par exemple un ou plusieurs traitements de surface énumérés ci-dessus, est chauffé dans un four à une température déterminée suivant notamment la nature dudit substrat, sa forme et l'épaisseur de revêtement désirée. Le substrat ainsi chauffé est ensuite plongé dans une composition de poudre utilisée dans l'invention maintenue en suspension par un gaz en circulation dans une cuve à fond poreux. La poudre fond au contact des surfaces métalliques chaudes et forme ainsi un dépôt dont l'épaisseur est fonction de la température du substrat et de sa durée d'immersion dans la poudre.

En trempage en lit fluidisé, la proportion préférée de polymère A par rapport au poids de polyamide est avantageusement comprise entre 1 et 10 %. La granulométrie des poudres mises en oeuvre en lit fluidisé peut être comprise entre 10 et 1.000 µm et de préférence, entre 80 et 200 µm. En général, l'épaisseur du revêtement peut être comprise entre 150 et 1.000 µm, et de préférence entre 200 et 700 µm.

## MANIERES DE REALISER L'INVENTION

Les exemples suivants illustrent l'invention sans toutefois la limiter.

Dans les exemples suivants "MFI" désigne le melt index exprimé en g/10 min à 210 °C avec une charge de 2.160 g et une filière de 2,095 mm. La viscosité inhérente est mesurée dans le métacrésol à 25 °C pour une concentration de 0,5 g/100 g et est exprimée en dl/g.

### Exemple 1

### 1-1 Préparation de la composition en poudre

On dissout 500 g d'EVOH, de teneur molaire en éthylène 44 % et de MFI =12, dans un mélange de 2,5 kg d'isopropanol (IPA) et de 2,5 kg d'eau. Cette solution (1) est chauffée jusqu'à 80 °C sous agitation pendant 2 heures.

400 g de la solution (1) sont alors ajoutés à 1 kg de poudre de polyamide 11, de viscosité inhérente égale à 0,9 et contenant 13 % en poids d'additifs divers dont 9,6 % de charges, 1,8 % de pigments et 4,6 % d'agents d'étalement, anti-oxydants, anti-cratères et réducteurs.

On agite le mélange en continu pendant 4 min à température ambiante. On obtient une pâte que l'on sèche dans un four pendant 6 heures afin d'éliminer le mélange eau/isopropanol. Le résidu sec est pulvérisé et tamisé à travers un tamis de maille 100 μm afin d'éliminer les grosses particules ne correspondant pas à la granulométrie des poudres électrostatiques.

**1- 2 mise en oeuvre**

La composition obtenue en 1-1 est déposée à température ambiante par projection électrostatique négative (a) ou positive (b) de 30 kV sur une plaque d'acier de 1 mm d'épaisseur ayant préalablement subi un dégraissage suivi d'un grenaillage, la surface métallique étant à potentiel 0. Le substrat ainsi revêtu passe dans un four maintenu à 220°C +/- 20°C où il séjourne de 5 à 15 min, puis est retiré du four et refroidi à l'air.

**1- 3 caractéristiques du matériau**

A) Le matériau est un composite comprenant successivement :

- une plaque d'acier dégraissé et grenaillé (épaisseur 1 mm),
- une couche de composition en poudre telle que décrite sous 1-1 d'épaisseur 100 μm.

B) Le matériau décrit en 1-3 A) subit le test d'adhérence défini par la norme NF T58-112. Une note de 0 à 4 est donnée en fonction de l'adhérence obtenue.

- Classe 4: le film ne peut être séparé du métal;
- Classe 3: le film se sépare irrégulièrement, la liaison est totale sur au moins 50 % de la surface;
- Classe 2: le film se sépare irrégulièrement, la force nécessaire à l'arrachement est élevée et se situe à la limite de la résistance du revêtement;
- Classe 1: le film se sépare de la surface avec facilité, la liaison est faible;
- Classe 0: le revêtement ne présente aucune liaison avec la surface.

C) Le matériau décrit en 1-3 A) subit le test de tenue à la corrosion au brouillard salin défini par la norme NF X41-002. Après vieillissement de 1 000 heures au brouillard salin, on observe l'évolution de l'adhérence selon la norme NF T58-112. Les résultats d'adhérence obtenus par le matériau décrit en 1-3 A) sont indiqués dans le tableau 1.

**Exemple 2**

On renouvelle l'essai de l'exemple 1 en ajoutant 400 g de la solution obtenue en 1-1 à 1 kg de poudre de polyamide 12 et de copolyamide 6/12 de viscosité inhérente 0,96 et contenant 12 % d'additifs divers dont 11,3 % de charges et pigments et 0,7 % d'agents antioxydant et réducteur ainsi que 3 % de résine époxy/sulfonamide préalablement broyée à un diamètre moyen de 10 μm. Le composé époxyde est une résine dérivant de la réaction du bisphénol A et de l'épichlorhydrine. Le poids d'équivalent époxyde de cette résine est 172 g et sa teneur en hydroxyle est 0,11 équivalent hydroxyle par kg de résine. Le sulfonamide est le para-toluène sulfonamide. On réalise ainsi un matériau composite comprenant successivement:

- une plaque d'acier dégraissé et grenaillé d'épaisseur 1 mm;
- une couche de polyamide 12, 6/12 d'épaisseur 120 μm.

Le matériau décrit ci-dessus subit un test d'adhérence après vieillissement au brouillard salin tels que défini en 1-3 B) et 1-3 C). Les résultats sont répertoriés dans le tableau 1.

### Exemple 3

### 3 -1 préparation de la composition en poudre

On ajoute 40 parties en poids de copolymère EVOH de caractéristiques identiques à celles de l'exemple 1-1 préalablement broyées cryogéniquement à une granulométrie comprise entre 5 et 500 µm à 1.000 parties de PA-11 de viscosité inhérente 0,90 et contenant 13,8 % d'additifs dont 11,3 % de charges et 3 % de résine époxy sulfonamide décrite dans l'exemple 2. L'ensemble est malaxé et homogénéisé à une température comprise entre 190 et 210 °C. Le temps de séjour dans l'appareil de malaxage est de l'ordre de 30 s. Le produit obtenu, une fois refroidi à l'air ambiant, est broyé afin d'obtenir une granulométrie de poudre comprise entre 10 et 80 µm.

### 3 - 2 mise en oeuvre

La composition en poudre obtenue sous 3-1 est projetée électrostatiquement sur une plaque d'acier dans les mêmes conditions que celles décrites dans l'exemple 1-2.

### 3 - 3 caractéristiques du matériau

A) Le matériau est un composite comprenant successivement:

♦    une plaque d'acier dégraissé et grenaillé (épaisseur 1 mm),
♦    une couche de composition en poudre telle que décrite sous A d'épaisseur 110 µm.

B) Le matériau décrit en 3-3 A) subit des tests d'adhérence et de vieillissement au brouillard salin tels que définis dans l'exemple 1-3 B) et 1-3 C). Les résultats obtenus par le matériau décrit en 3-3 A) sont répertoriés dans le tableau 1.

### Exemple 4

On renouvelle l'essai de l'exemple 3 en utilisant un mélange comprenant :

♦    40 parties en poids de copolymère EVOH, de caractéristiques identiques à celles de l'exemple 1-1, préalablement broyées cryogéniquement à une granulométrie comprise entre 5 et 150 µm, à 1.000 parties de polyamide 12 de viscosité inhérente 0,95. L'ensemble est malaxé et homogénéisé à une température comprise entre 180 et 220 °C. Le temps de séjour dans l'appareil de malaxage est de l'ordre de 30 s. Le produit obtenu, une fois refroidi est broyé cryogéniquement afin d'obtenir une granulométrie de poudre comprise entre 10 et 80 µm.

30 parties en poids de résine époxy/sulfonamide broyées à un diamètre moyen de 10 µm (résine de l'exemple 2) sont ajoutées à 1.000 parties du produit obtenu, par simple mélange à sec.
On réalise ainsi un matériau composite comprenant successivement:

♦    une plaque d'acier dégraissé et grenaillé d'épaisseur 1 mm;
♦    une couche de polyamide 12 d'épaisseur 100 µm.

Le matériau ainsi décrit subit les tests d'adhérence après vieillissement au brouillard salin définis en 1-3 C). Les résultats sont répertoriés dans le tableau 1.

### Exemple 5

On ajoute 500 parties en poids de copolymère EVOH non broyé (granulés) à 500 parties en poids de polyamide 11 non broyé (écailles) de viscosité inhérente 0,95. L'ensemble est malaxé et homogénéisé à une température comprise entre 190 et 210°C. Le temps de séjour dans l'appareil de malaxage est d'environ 20 s. Une fois refroidies, 80 parties de ce mélange maître sont ajoutées à 1.000 parties de polyamide 11 de viscosité inhérente 0,90 et contenant 16,8 % d'additifs dont 11,3 % de charges. L'ensemble est malaxé et homogénéisé à une température comprise entre 190 et 210 °C pour un temps de séjour dans l'appareil de malaxage d'environ 30 s. Le produit obtenu, une fois refroidi, est broyé à une granulométrie de poudre comprise entre 10 et 80 µm. On réalise selon la mise en oeuvre décrite en 1-2

EP 0 706 544 B1

un matériau composite comprenant successivement:

- une plaque d'acier dégraissé et grenaillé d'épaisseur 1 mm;
- une couche de polyamide 11 d'épaisseur 100 µm.

Le matériau ainsi décrit subit les tests d'adhérence et de tenue à la corrosion au brouillard salin définis en 1-3 B) et 1-3 C). Les résultats sont répertoriés dans le tableau 1.

**Exemple 6**

**6 -1 préparation de la composition en poudre**

Dans un mélangeur rapide de type HENSCHEL de contenance 70 I, on charge 20 kg de poudre de PA-11, 1 kg de copolymère EVOH de composition décrite en 1-1, broyé cryogéniquement puis sélecté de façon à obtenir une taille de particules inférieure à 60 µm ainsi que 0,6 kg de résine époxy-sulfonamide décrite dans l'exemple 2 et broyée à une granulométrie moyenne de 10 µm. Le PA-11 utilisé a une viscosité inhérente de 0,90 et contient 13,8 % d'additifs dont 11,3 % de pigments et charges et 2,5 % d'agents antioxydant, anti-cratère et réducteur. On brasse le mélange pendant 100 s à une vitesse de 830 trs/min. La poudre obtenue peut être mise en oeuvre telle quelle.

**6 - 2 mise en oeuvre**

La composition en poudre obtenue sous 6-1 est projetée électrostatiquement sur une plaque d'acier dans les mêmes conditions que celles décrites dans l'exemple 1-2.

**6 - 3 caractéristiques du matériau**

Le matériau est un composite comprenant successivement :

- une plaque d'acier dégraissé et grenaillé d'épaisseur 1 mm ;
- une couche de polyamide 11 d'épaisseur 100 µm.

Le matériau ainsi décrit subit les tests d'adhérence et de tenue à la corrosion au brouillard salin définis en 1-3 B) et 1-3 C). Les résultats sont répertoriés dans le tableau 1.

**Exemple 7**

On projette électrostatiquement sur une plaque d'acier dégraissé et grenaillé dans les mêmes conditions que celles de l'exemple 6-2, une composition constituée de 53 % en poids de polyamide 12 et de 26 % en poids de copolyamide 6/12, d'additifs divers dont 11,3 % de pigments, charges et 0,7 % d'agents antioxydant, réducteur et d'étalement, 3 % de résine époxy/sulfonamide décrite dans l'exemple 2 et de 5 % de copolymère EVOH broyé selon les caractéristiques données dans l'exemple 6. La viscosité inhérente de la composition est évaluée à 0,96. On réalise ainsi un matériau composite comprenant successivement:

- une plaque d'acier dégraissé et grenaillé d'épaisseur 1 mm;
- une couche de polyamide 12 et 6/12 d'épaisseur 100 µm.

Le matériau décrit ci-dessus subit les tests d'adhérence et de tenue à la corrosion au brouillard salin définis en 1-3 B) et 1-3 C). Les résultats sont répertoriés dans le tableau 1.

**Exemple 8 (non conforme à l'invention)**

**8-1)** On projette électrostatiquement sur une plaque d'acier dégraissé grenaillé dans les mêmes conditions que celles de l'exemple 1-2, une poudre de mêmes caractéristiques que celles décrites dans l'exemple 6-1, de granulométrie moyenne de 35 µm, mais ne contenant pas de copolymère EVOH.
**8- 2)** Le matériau obtenu est un composite comprenant successivement :

- une plaque d'acier dégraissé grenaillé (épaisseur 1 mm);
- une couche de poudre de PA-11 d'épaisseur 110 μm.

**8 - 3)** Le matériau décrit en 8-2 subit un test d'adhérence après vieillissement au brouillard salin tel que défini dans l'exemple 1-3 C). Les résultats sont réunis dans le tableau 1.

## Exemple 9

On renouvelle l'essai de l'exemple 3 dans les mêmes conditions opératoires en utilisant de la poudre de PA-11 colorée en gris, contenant 16 % en poids d'additifs dont 11,4 % de pigments et charges, 1,6% d'agent antioxydant, anti-cratère et réducteur et 3 % de résine époxy/sulfonamide de l'exemple 2 (9-1).

Les compositions suivantes contiennent également respectivement 20 parties (9-2) 60 parties (9-3) 80 parties (9-4) et 100 parties (9-5) en poids de copolymère EVOH pour 1.000 parties en poids de la poudre de PA-11 précédemment décrite. L'influence de la quantité de copolymère EVOH sur les performances du matériau composite après 1.000 heures au brouillard salin (NF X41-002) peuvent être appréciées dans le tableau 2.

## Exemple 10

Dans une cuve de trempage en vue d'application en lit fluidisé, on place de la poudre de polyamide telle que définie dans le présent document de granulométrie moyenne comprise entre 20 et 300 μm. Cette poudre est mise en fluidisation par arrivée d'un gaz sur une dalle poreuse installée au fond de la cuve. Le substrat métallique, après traitement de surface comprenant un dégraissage, un grenaillage, est préchauffé dans un four ventilé jusqu'à une température comprise entre 250-400°C. On plonge alors le substrat dans la poudre en fluidisation pendant un temps compris entre 1 et 10 s afin d'obtenir un revêtement d'épaisseur comprise entre 250 et 700 μm. Le substrat ainsi revêtu est refroidi à température ambiante ou bien est trempé dans de l'eau froide. On utilise des poudres de PA-11 et de PA-12 colorées en Noir (respectivement échantillon A et B) contenant 0 ou 100 parties en poids de copolymère EVOH pour 1.000 parties de polyamide.

Le copolymère EVOH possède une teneur molaire de 44 % en éthylène et un MFI de 12.

On mesure l'adhérence des revêtements réalisés après 24 heures à l'air ambiant selon le test décrit dans l'exemple 1-3 B) ainsi que l'adhérence selon le même test après 1.000 h au brouillard salin (NF X41-002). Les résultats obtenus sont réunis dans les tableaux 3 et 4.

TABLEAU 1

| Exemple | Adhérence | adhérence après 1.000 heures brouillard salin | préparation de la poudre |
|---------|-----------|-----------------------------------------------|--------------------------|
| 1 | 4 | 2 | dissolution |
| 2 | 4 | 2 | dissolution |
| 3 | 4 | 4 | malaxage à l'état fondu |
| 4 | 4 | 4 | mabxage à l'état fondu |
| 5 | 4 | 4 | malaxage à l'état fondu à partir d'un mélange maître |
| 6 | 4 | 4 | mélange à sec |
| 7 | 4 | 2 | mélange à sec |
| 8 | 4 | 1 | |

TABLEAU 2

| Exemple | Adhérence | adhérence après 1.000 heures brouillard salin | % en poids de résine EVOH |
|---------|-----------|-----------------------------------------------|---------------------------|
| 9-1 | 4 | 3 | 3 |
| 9-2 | 4 | 2 | 2 |
| 9-3 | 4 | 4 | 6 |

TABLEAU 2   (suite)

| Exemple | Adhérence | adhérence après 1.000 heures brouillard salin | % en poids de résine EVOH |
|---------|-----------|----------------------------------------------|---------------------------|
| 9-4 | 4 | 4 | 8 |
| 9-5 | 4 | 4 | 10 |

TABLEAU 3

| % en poids de résine EVOH | Adhérence | adhérence après 1.000 heures brouillard salin |
|---------------------------|-----------|----------------------------------------------|
| 0 | 2 | 0 |
| 10 | 4 | 2 |

TABLEAU 4

| % en poids de résine EVOH | Adhérence | adhérence après 1.000 heures brouillard salin |
|---------------------------|-----------|----------------------------------------------|
| 0 | 2 | 0 |
| 10 | 4 | 1 |

**Revendications**

1. Utilisation d'une composition en poudre pour le revêtement de substrats métalliques comprenant (i) au moins un polyamide et (ii) au moins un polymère (A) ayant des fonctions hydroxy et compatible avec le polyamide, caractérisée en ce que pour 100 parties en poids de polyamide(s), ladite composition comprend jusqu'à 30 parties de polymère(s) (A).

2. Utilisation d'une composition selon la revendication 1, caractérisée en ce que le polyamide est le polyamide 11 ou 12.

3. Utilisation d'une composition selon la revendication 1 ou 2, caractérisée en ce que le polymère (A) est un copolymère de l'éthylène et de l'alcool vinylique.

4. Utilisation d'une composition selon l'une des revendications 1 à 3, caractérisée en ce qu'elle comprend aussi une résine époxy/sulfonamide (B).

5. Matériau composite comprenant un substrat métallique revêtu d'une composition selon l'une des revendications 1 à 4.

6. Matériau composite comprenant un substrat métallique revêtu d'au moins une couche à base de polyamide résultant de la fusion d'une composition selon l'une des revendications 1 à 4.

**Patentansprüche**

1. Verwendung einer pulverförmigen Zusammensetzung für die Beschichtung metallischer Träger, die (i) mindestens ein Polyamid und (ii) mindestens ein Polymer (A), das Hydroxygruppen aufweist und mit dem Polyamid kompatibel ist, enthält, dadurch gekennzeichnet, daß die Zusammensetzung bis zu 30 Gewichtsteile Polymer(e) (A) pro 100 Gewichtsteile Polyamid(e) enthält.

2. Verwendung einer Zusammensetzung nach Anspruch 1, dadurch gekennzeichnet, daß es sich bei dem Polyamid um Polyamid 11 oder Polyamid 12 handelt.

3. Verwendung einer Zusammensetzung nach Anspruch 1 oder 2, dadurch gekennzeichnet, daß das Polymer (A) ein Ethylen/Vinylalkohol-Copolymer ist.

**4.** Verwendung einer Zusammensetzung nach einem der Ansprüche 1 bis 3, dadurch gekennzeichnet, daß sie außerdem ein Epoxid/Sulfonamid-Harz (B) enthält.

**5.** Verbundmaterial, das einen metallischen Träger, der mit einer Zusammensetzung nach einem der Ansprüche 1 bis 4 beschichtet ist, umfaßt.

**6.** Verbundmaterial, das einen metallischen Träger umfaßt, der mit mindestens einer Schicht auf Polyamidbasis, die beim Schmelzen einer Zusammensetzung nach einem der Ansprüche 1 bis 4 entsteht, beschichtet ist.

**Claims**

**1.** Use of a powder composition for coating metal substrates, comprising (i) at least one polyamide and (ii) at least one polymer (A) having hydroxyl functional groups and being compatible with the polyamide, characterized in that the said composition comprises up to 30 parts of polymer (s) (A) per 100 parts by weight of polyamide(s).

**2.** Use of a composition according to Claim 1, characterized in that the polyamide is nylon-11 or nylon-12.

**3.** Use of a composition according to Claim 1 or 2, characterized in that polymer (A) is an ethylene/vinyl alcohol copolymer.

**4.** Use of a composition according to one of Claims 1 to 3, characterized in that it also comprises an epoxy/sulphonamide resin (B).

**5.** Composite comprising a metal substrate coated with a composition according to one of Claims 1 to 4.

**6.** Composite comprising a metal substrate coated with at least one polyamide-based layer resulting from the melting of a composition according to one of Claims 1 to 4.